(19) **Europäisches Patentamt**

**European Patent Office**

**Office européen des brevets**

(11) **EP 1 468 324 B1**

(12) **EUROPEAN PATENT SPECIFICATION**

(45) Date of publication and mention
of the grant of the patent:
**01.03.2006 Bulletin 2006/09**

(51) Int Cl.:
*G02C 7/04* (2006.01)    *G02C 7/02* (2006.01)

(21) Application number: **02799206.4**

(22) Date of filing: **04.12.2002**

(86) International application number:
**PCT/US2002/038590**

(87) International publication number:
**WO 2003/054616 (03.07.2003 Gazette 2003/27)**

(54) **MULTIFOCAL OPHTHALMIC LENSES**

MEHRFOKALE KONTAKTLINSEN

LENTILLES OPHTALMOLOGIQUES A FOYER PROGRESSIF

(84) Designated Contracting States:
**DE FR GB IE IT**

(30) Priority: **20.12.2001  US 27602**

(43) Date of publication of application:
**20.10.2004  Bulletin 2004/43**

(73) Proprietor: **Johnson & Johnson Vision Care, Inc.**
**Jacksonville, FL 32256 (US)**

(72) Inventors:
• **JONES, Larry, G.**
  **Jacksonville, FL 32218 (US)**
• **CLUTTERBUCK, Timothy, A.**
  **Jacksonville, FL 32225 (US)**

(74) Representative: **Mercer, Christopher Paul et al**
**Carpmaels & Ransford,**
**43-45 Bloomsbury Square**
**London WC1A 2RA (GB)**

(56) References cited:
EP-A- 1 126 310          US-A- 4 898 461
US-A- 5 408 281          US-B1- 6 176 580

• **PATENT ABSTRACTS OF JAPAN vol. 016, no. 500 (P-1437), 15 October 1992 (1992-10-15) & JP 04 181209 A (SEIKO EPSON CORP), 29 June 1992 (1992-06-29)**

**Description**

Field of the Invention

The invention relates to ophthalmic lenses. In particular, the invention provides lenses that use more than one optical power, or focal length, and are useful in the correction of presbyopia.

Background of the Invention

As an individual ages, the eye loses its ability to accommodate, or bend the natural lens, to focus on objects that are relatively near to the observer. This condition is known as presbyopia. Similarly, for persons who have had their natural lens removed and an intraocular lens inserted as a replacement, the ability to accommodate is totally absent.

Among the methods used to correct for the eye's failure to accommodate is the use of lenses, both spectacle and contact lenses, that provide correction for both distance and near visions. Among the contact lens designs that have been proposed for presbyopia correction are lenses in which the design is independent of the pupil size meaning that the designs provide corrections for pupil variations due to lighting and object fixation distance. Examples of such designs are those that include optical zones of pie-sliced, checkerboard and hexagonal patterns on either or both surfaces of the lens. However, these designs are disadvantageous in that they do not easily allow equal optical performance across the pupil variations.

JP 04 181209 A discloses an ophthalmic lens comprising a first refractive surface comprising an optic zone having an area of distance optic power, and an area of neer optical power interspersed within the area of distance optic power in a spiral pattern.

Additionally, both a spiral diffractive design and a spiral-printed design are disclosed in United States Patent No. 5,408,281. The diffractive design of this patent is disadvantageous in that it is difficult to manufacture using standard manufacturing techniques. The printed spiral design serves to achieve a wavelength or color transmission difference in each of the spiral bands upon surface on which it is printed. Thus, lens manufacturing requires a wavelength selective coating or paint to be placed in a spiral pattern on the lens surface or the doping of different spiral bands with different dyes.

U.S. 6,176,580 discloses a method for designing and fitting ophthalmic lenses that takes into account the individual fitting characteristics of the lens.

Therefore, a need exists for a design that overcomes some or all of the disadvantages of the known designs.

Brief Description of the Drawing

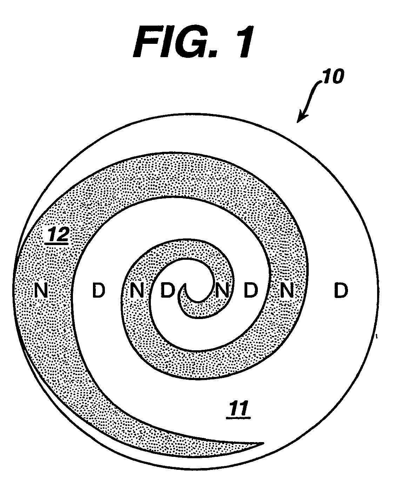

FIG. 1 is a plan view of first embodiment of an optic zone of a lens of the invention.

Detailed Description of the Invention and Preferred Embodiments

The invention provides ophthalmic lenses for correcting the eye's lack of ability to accommodate as recited in the appended claims. The lenses of the invention utilize a refractive surface having a spiral pattern. The design of the invention is advantageous in that, due to the area ratio value maintained for all circular areas centered in the center of the spiral pattern, it permits zones of near and distance vision correction having equal area ratios regardless of pupil size.

By "ophthalmic lens" is meant a spectacle, contact, intraocular lens, or the like, or combinations thereof. Preferably, the lenses of the invention are contact lenses. By "distance optical power" is meant the amount of refractive power required to correct the wearer's distance vision acuity to the desired degree. By "near optical power" is meant the amount of refractive power required to correct the wearer's near vision acuity to the desired degree.

Lenses are disclosed for which one or both of the front (object side) and back (eye side) of the lens has an area of distance power within the optic zone. Within this area of distance optical power is near optical power distributed in a substantially spiral pattern. Referring to Fig. 1, optic zone 10 is shown in which area 11 is seen, which area is of a radius of curvature effective to correct the lens wearer's distance vision acuity to the desired degree. Within area 11 is area 12, which area is of a radius of curvature effective to correct the wearer' near vision acuity to the desired degree.

One ordinarily skilled in the art will recognize that the near and distance zones making up the spiral pattern are of different refractive powers and the powers are being placed onto a surface of a lens having a constant center thickness. Thus, sag differences between the near and distance vision zones are eliminated by adjusting instantaneous surface curvature, or slope, at the boundaries between the zones so that smooth transitions between the zones results. This may be accomplished by use of standard, commercially available computer aided design software along with ray tracing software or optical ray tracing software.

The spiral pattern may be on the front or back surface of the lens. The lens of the present invention includes a spiral pattern of plano and near power may be on one surface with the opposite surface being all distance power desired for the lens. Preferably, the spiral pattern is on the front surface.

Any suitable mathematical equation may be used to generate the spiral design. A preferred equation for generating a 50:50 ratio of distance optical power to near optical power is:

$$R = \varepsilon^{\alpha\theta} - 1$$

wherein $R$ is the radius in mm, $\alpha$ is a constant, and $\theta$ is the circumference angular position in radians. If the constant $\alpha$ is chosen as 0.10246, then for an 8 mm diameter optic zone of $R_{max} = 4$, there may be traced a spiral line that goes around 2.5 times before reaching the edge of the optic zone. If a spiral line is created that uses points between the points for each $\theta$ and $\theta + 2\pi$ paired point on the first spiral line, two equal area spiral zones are created. By varying the fractional position between the $\theta$ and $\theta + 2\pi$ pairs, the zone area ratios can be varied.

The ratio of the lens' area devoted to the distance and near optical powers must be such that it is effective to provide the visual acuity correction desired for the lens wearer at all of the wearer's various pupil fixation sizes. These ratios of powers may be determined by any known method including, without limitation, optical software useful in gauging and optimizing the optical performance of a design. Suitable software includes, without limitation, Zemax available from Focus Software™.

In the lenses of the invention, the distance and near optical powers are spherical powers. Additionally, the distance and near optical power zones may be of any desired and practicable dimensions. The optic zone may be, and for soft contact lenses preferably is, surrounded by a non-optical lenticular zone. One ordinarily skilled in the art will recognize that bevels, slab-offs, and the like may be used in the lens periphery.

Contact lenses useful in the invention may be either hard or soft lenses. Soft contact lenses, made of any material suitable for producing such lenses, preferably are used. The lenses of the invention may have any of a variety of corrective optical characteristics incorporated onto the surfaces in addition to distance and near optical powers including, without limitation, cylinder power, prism power, and the like, and combinations thereof. Additionally, one or more surfaces of the lens may be surfaces calculated from topographic measurements, or topographically—derived surfaces.

The lenses of the invention may be formed by any conventional method. For example, the spiral pattern formed therein may produced by diamond-turning using alternating radii. The pattern may be diamond-turned into the molds that are used to form the lens of the invention. Subsequently, a suitable liquid resin is placed between the molds followed by compression and curing of the resin to form the lenses of the invention. Alternatively, the pattern may be diamond-turned into lens buttons.

## Claims

1. An ophthalmic lens for a lens wearer, comprising a first refractive surface comprising a first optic zone having an area of distance optical power and second refractive surface **characterised in that** the second refractive surface has an area of plano power in a second optical zone, wherein interspersed within the area of plano power and in a spiral pattern is an area of near optical power.

2. The lens of claim 1, wherein one of the first and second refractive surfaces is a topographically-derived surface.

3. The lens of claim 1 or claim 2, wherein the first refractive surface is a front surface of the lens.

4. The lens of claim 1 or claim 2, wherein the first refractive surface is a front surface of the lens and the second refractive surface is a back surface of the lens.

5. The lens of any one of claims 1 to 4, wherein the lens is a contact lens.

## Patentansprüche

1. Ophthalmische Linse für einen Linsenträger mit einer ersten brechenden Oberfläche, die eine erste optische Zone mit einem Bereich einer optischen Entfernungsstärke aufweist, und einer zweiten brechenden Oberfläche, **dadurch gekennzeichnet, daß** die zweite brechende Oberfläche einen Bereich einer Plano-Stärke in einer zweiten optischen Zone aufweist, wobei in dem Bereich der Plano-Stärke eingestreut und in einem Spiralmuster ein Bereich einer optischen Nahstärke vorliegt.

2. Linse nach Anspruch 1, bei der die erste oder die zweite brechende Oberfläche eine topographisch abgeleitete Oberfläche ist.

3. Linse nach Anspruch 1 oder 2, bei der die erste brechende Oberfläche eine Vorderseite der Linse ist.

4. Linse nach Anspruch 1 oder 2, bei der die erste brechende Oberfläche eine Vorderseite der Linse ist, und die zweite brechende Oberfläche eine Rückseite der Linse ist.

5. Linse nach einem der Ansprüche 1 bis 4, wobei die Line eine Kontaktlinse ist.

## Revendications

1. Lentille ophtalmique pour un porteur de lentille, comprenant une première surface de réfraction comportant une première zone optique ayant une zone de puissance optique à distance et une deuxième surface de réfraction **caractérisée en ce que** la deuxième surface de réfraction comprend une zone de puissance plane dans une deuxième zone optique, dans laquelle est intercalée dans la zone de puissance plane et dans un motif en spirale une zone de puissance optique proche.

2. Lentille selon la revendication 1, dans laquelle une des première et deuxième surfaces de réfraction est une surface dérivée de façon topographique.

3. Lentille selon la revendication 1 ou 2, dans laquelle la première surface de réfraction est une surface avant de la lentille.

4. Lentille selon la revendication 1 ou la revendication 2, dans laquelle la première surface de réfraction est une surface avant de la lentille et la deuxième surface de réfraction est une surface arrière de la lentille.

5. Lentille selon l'une quelconque des revendications 1 à 4, dans laquelle la lentille est une lentille de contact.

# FIG. 1